# EUROPÄISCHE PATENTSCHRIFT

(11) **EP 2 788 173 B1**
(45) Veröffentlichungstag und Bekanntmachung des Hinweises auf die Patenterteilung: **18.11.2015**
(21) Anmeldenummer: 12797858.3
(22) Anmeldetag: 03.12.2012
(51) Int. Cl.: B29C 70/34, B60B 5/02, B29L 31/32

(54) **RAD AUS FASERVERBUNDWERKSTOFFEN UND VERFAHREN ZUR HERSTELLUNG**
WHEEL MADE OF FIBER COMPOSITES, AND PRODUCTION METHOD
ROUE RÉALISÉE EN MATÉRIAUX COMPOSITES RENFORCÉS PAR FIBRES ET PROCÉDÉ DE FABRICATION

(30) Priorität: 07.12.2011 DE 102011087936
(43) Veröffentlichungstag der Anmeldung: 15.10.2014
(73) Patentinhaber: ThyssenKrupp Carbon Components GmbH, 01723 Kesselsdorf (DE)
(72) Erfinder: WERNER, Jens, 01640 Coswig (DE); KÖHLER, Christian, 01099 Dresden (DE); BARTSCH, André, 02747 Großhennersdorf (DE); MÄKE, Sandro, 01796 Dohma (DE); DREßLER, Michael, 01307 Dresden (DE); LEPPER, Martin, 01279 Dresden (DE); HUFENBACH, Werner, 01324 Dresden (DE)
(74) Vertreter: Kailuweit & Uhlemann Patentanwälte Partnerschaft mbB
(86) Internationale Anmeldenummer: PCT/EP2012/074183
(87) Internationale Veröffentlichungsnummer: WO 2013/083498

(56) Entgegenhaltungen:
- DE-A1- 2 739 597

## Beschreibung

Die Erfindung betrifft ein einteiliges Rad aus Faserverbundwerkstoffen ohne Faserunterbrechung sowie ein Verfahren zu dessen Herstellung.

Die Verwendung von Leichtbaumaterialien im Fahrzeugbau, besonders in der Ersatz- und Tuningteil - Herstellung, ist aus dem Stand der Technik bekannt. So hat sich die Verwendung von Leichtmetallen wie Aluminium und Magnesium für Karosserie- und Kleinteile nicht nur im Rennsport oder für Kleinserien sondern mittlerweile auch bei Produkten für das Massenpublikum durchgesetzt. Zusätzlich gewinnen in letzter Zeit Faserverbundwerkstoffe, aufgrund Ihres hervorragenden Verhältnisses von Gewicht und mechanischen Eigenschaften, zunehmend an Bedeutung.

Damit ein Bauteil aus faserverstärktem Kunststoff die vielfältigen auf es einwirkenden Belastungen optimal aufnehmen kann, sollte es ebenso vielfältig orientierte Verstärkungsfasern enthalten, da diese Kräfte insbesondere ihrer Länge nach aufnehmen können. Darüber hinaus haben sich Bauteile aus faserverstärktem Kunststoff bewährt, die aus zusammenhängenden Faserlagen bestehen, die idealerweise das gesamte Bauteil durchlaufen.

Bei kompliziert geformten und stark beanspruchten Bauteilen, wie bspw. Rädern, wurden diese Anforderungen an den inneren Aufbau von faserverstärkten Bauteilen bislang in der Regel nicht erfüllt. Dies liegt darin begründet, das aus dem Stand der Technik kein Verfahren zur Herstellung eines Rades bekannt ist, das Endlosfasern der Geometrie eines Rades entsprechend ablegen kann.

Es finden sich daher im Stand der Technik insbesondere Verfahren zur Herstellung von Rädern im Spritzgussverfahren, wobei zu Gunsten der Formbarkeit der Bauteile nur sehr kurze Verstärkungsfasern genutzt werden. Eine andere Möglichkeit besteht darin, die Räder mehrteilig aufzubauen, wobei die einfache Geometrie der Einzelteile deren Aufbau aus langfaserverstärkten Kunststoffen erlaubt.

In der US 3,917,352 A wird ein Fahrzeugrad aus faserverstärktem Kunststoff sowie ein Verfahren zu dessen Herstellung beschrieben. Das Rad ist dabei einteilig aufgebaut und umfasst sowohl Felgenbett als auch Radscheibe. Die Herstellung des Rades erfolgt durch Wicklung eines Gewebeschlauches um die zwei Hälften eines Formwerkzeugs, wobei durch Überwicklung einer Nut die Radscheibe ausgebildet werden kann. Die Faserablage beim Wickeln erfolgt jedoch nicht ausreichend formschlüssig, daher muss der Gewebeschlauch zusätzlich mit Gewebeband oder Filamenten umwickelt werden. Eine Ausformung der Radscheibe schon während der Ablage der Faserlagen ist nicht offenbart.

Gegenstand der DE 42 23 290 B4 ist ein Verbund-Kunstharzrad, das aus mehreren Teilgussstücken besteht und dessen Radscheibe direkt in eines der Felgenhörner übergeht. Die Teilgussstücke weisen an ihren Verbindungsflächen korrespondierende Gewinde auf, so dass sie mittels Verschraubung zusammengefügt werden können. Die einzelnen Teilgussstücke bestehen jeweils aus kurzfaserverstärktem Kunststoff, wodurch der Aufbau einer solchen Felge aus Endlosfasern ohne Faserunterbrechung gemäß der Offenbarung dieser Druckschrift nicht möglich ist. Aufgrund des Aufbaus des Verbund-Kunstharzrades ist insbesondere an den Verbindungsstellen der Teilgussstücke mit mechanischen Schwachstellen zu rechnen.

Mit der DE 100 06 400 A1 wird ein zumindest abschnittsweise aus faserverstärktem Kunststoff bestehendes Scheibenrad sowie ein Verfahren zu dessen Herstellung offenbart. Das Scheibenrad besteht dabei bevorzugt aus einem metallischen Felgenbett sowie aus zumindest teilweise aus Unidirektionalfaser-SMC bestehendem Felgenbett. Radscheibe und Felgenbett sind dabei stoff- oder formschlüssig oder durch anderswirkende Befestigungsmittel mit einander verbunden. Im bevorzugten Falle des Formschlusses weist die Radscheibe eine Vielzahl von stiftartigen Vorsprüngen auf, die mit einer Vielzahl von Bohrungen im Felgenbett korrespondieren. Derartige Befestigungsmittel sind nur sehr schwer faserverstärkt zu konstruieren und weisen daher häufig geringe Faservolumenanteile auf. Es ist daher von verminderten mechanischen Eigenschaften des offenbarten Scheibenrades im Vergleich zu einteilig aus Faserverbundwerkstoffen aufgebauten Bauteilen ausgegangen werden. Ein solcher einteilige Aufbau eines Scheibenrads wird in der Druckschrift nicht beschrieben.

Die US 4,721,342 A offenbart ein faserverstärkte Kunststoffrad mit im Wesentlichen dreiteiligem Aufbau. Insbesondere ist die aus Fasermaterial bestehende Radscheibe des Rades einzeln konstruiert und an die Innere zweier hohlzylinderartiger Lagen von Fasermaterial stoffschlüssig angebunden. Durch die Verbindung der zwei hohlzylinderartigen Faserlagen und der die Radscheibe bildenden Faserlage erst im Konsolidierungsprozess ist eine aufwendige Fixierung der Faserlagen zueinander während der Faserablage zu gewährleisten. Des Weiteren ist an den Verbindungsstellen der einzelnen Teile von im Vergleich zum restlichen Bauteil verminderten mechanischen Eigenschaften auszugehen.

Mit der US 2005/0104441 A1 wird ein im Wesentlichen zweiteiliges faserverstärktes Fahrzeugrad aus Verbundwerkstoff offenbart. Das Fahrzeugrad besteht dabei aus einem faserverstärkten Felgenbett sowie einer faserverstärkten Radscheibe, die erst im Konsolidierungsprozess stoffschlüssig und womöglich formschlüssig miteinander verbunden werden. Somit liegt auch bei dem offenbarten Rad gerade im besonders belasteten Bereich des Übergangs von der Radscheibe zum Felgenbett keine Faserverstärkung der Felge vor. Die Vorbereitung der Vorformlinge für Felgenbett und Radscheibe erfolgt gemäß der Druckschrift immer isoliert voneinander, ein ohne Faserunterbrechung einteilig aufgebautes Fahrzeugrad ist somit in dieser Druckschrift nicht offenbart.

In der DE 10 2004 028 841 A1 und in der DE 103 02997 A1 wird ein Leichtmetallrad offenbart, bei dem die Radscheibe in das äußere Felgenhorn übergeht. Weiterhin kann das Rad im hinterschnittenen Bereich des äußeren Felgenhorns einen Hohlraum aufweisen, wodurch es eine besonders gute Stabilität erlangen soll. Die Konstruktion eines solchen Rades aus Faserverbundwerkstoff ist in der Druckschrift nicht offenbart.

Die Aufgabe der Erfindung besteht darin die Nachteile des Standes der Technik zu überwinden und ein Rad aus Faserverbundwerkstoff bereitzustellen, das hervorragende mechanische Eigenschaften bei gleichzeitig geringem Gewicht aufweist, sowie einfach und kostengünstig in der Herstellung ist.

Die erfindungsgemäße Aufgabe wird gelöst durch die Merkmale des Hauptanspruchs sowie des Anspruchs 11. Bevorzugte Weiterbildungen der Erfindung sind in rückbezogenen Unteransprüchen dargestellt.

Das erfindungsgemäße Rad weist vorteilhaft eine Form auf, die der Form üblicher Räder von Kraftfahrzeugen (KFZ) weitestgehend entspricht. Zur Aufnahme des Reifens weist das Rad ein Felgenbett auf, das beidseitig von Felgenhörnern begrenzt ist. Entsprechend der Ausrichtung der Felge im am KFZ montierten Zustand wird zwischen dem äußeren Felgenhorn auf der dem Fahrzeug abgewandten Seite und dem inneren Felgenhorn auf der dem Fahrzeug zugewandten Seite unterschieden. Da die Zwillingsbereifung von Nutzfahrzeugen jedoch häufig von Rädern gebildet wird, deren Radscheiben sich zugewandt sind, wird nachfolgend alternativ die Bezeichnung erstes und zweites Felgenhorn verwendet. Das Felgenbett weist zwischen den Felgenhörnern ein Felgentiefbett auf, in dessen Bereich das Rad einen kleineren Umfang aufweist als an den Felgenhörnern. Die Mitte zwischen den Felgenhörnern wird als Felgenmitte bezeichnet. Das Felgentiefbett selbst kann weitere Ausgestaltungen, bspw. Hump oder Felgenschulter, aufweisen, die für die vorliegende Erfindung jedoch von untergeordneter Bedeutung sind.

Darüber hinaus weist das erfindungsgemäße Rad eine Radscheibe auf, die der Anbindung des Rades an die Radnabe bzw. der Radaufhängung dient. Alternativ kann die Radscheibe auch nur durch einen Flansch gebildet werden, an den insbesondere formschlüssig durch Schraubverbindungen oder auch durch eine verzahnende Einbindung eines inneren Radscheibenelementes (dass auch durch einen Radstern bzw. -kranz o. ä. gebildet werden kann) zu befestigen ist. In diesem Fall würde dann die innere Radscheibe bzw. der Radstern die Verbindung zur Radnabe bzw. Radaufhängung herstellen. Dementsprechend stellt die Radscheibe eine sich von der Achse bzw. Radnabe radial ausdehnende Verbindungsfläche zum hohlzylinderartigen Felgenbett dar, an das sie winklig ansetzt. Hierbei kann es sich um einen rechten, spitzen oder stumpfen Winkel handeln. Die Radscheibe kann darüber hinaus eine konturierte Form aufweisen, sowohl aus ästhetischen als auch aus funktionellen Gründen, insbesondere einer Erhöhung der Festigkeit.

Weiterhin bevorzugt ist die Radscheibe als Radstern ausgebildet, wobei die radial ausgedehnte Verbindungsfläche Durchbrechungen aufweist, bspw. so dass eine bestimmte Zahl von Speichen die Verbindungen zwischen Radnabe und Felgenbett darstellen.

Bei dem erfindungsgemäßen Rad geht die Radscheibe in ein Felgenhorn über, wodurch der von dem Felgenbett gebildete Hohlzylinder eine einseitige Deckfläche aufweist. Die Radscheibe setzt am axial äußersten Punkt des Felgenbetts, dem Felgenhorn, an und verläuft von dort radial nach innen in Richtung der Rotationsachse des Felgenbetts bzw. Rades.

Erfindungsgemäß ist das Rad aus Faserverbundwerkstoff hergestellt, der in duro- oder thermoplastischen Matrixwerkstoff eingebettete Verstärkungsfasern aufweist. Als Verstärkungsfasern werden bevorzugt Kohlenstoff-, Glasfaser- oder Aramidfasern verwendet.

Das Rad, also Radscheibe und Felgenbett, ist einteilig aus dem Faserverbundwerkstoff aufgebaut. Dabei sind die Verstärkungsfasern bevorzugt als Endlosfasern schichtförmig in Faserlagen in Radscheibe und Felgenbett angeordnet und verlaufen wenigstens zu einem Teil der Faseranzahl unterbrechungsfrei zwischen Radscheibe und Felgenbett. Da die Faserlagen bevorzugt aus Endlosfasern gebildet sind, gehen die Faserlagen an Umkehrpunkten ineinander über, wobei eine Richtungsumkehr wenigstens eines Teils der der Fasern stattfindet. Die Umkehrpunkte befinden sich bevorzugt an der Peripherie der einteiligen Felge, also zum einen am Felgenhorn und zum anderen an der inneren Begrenzung der Radscheibe, der sogenannten Radnabenbohrung. Vorteilhaft weisen die Faserlagen im konsolidierten Zustand an diesen Umkehrpunkten ein erhöhte Stabilität auf, wodurch vorteilhaft eine besondere Festigkeit des Rades an den besonders beanspruchten Bereichen, wie beispielsweise der Radanbindung und den Felgenhörnern erreicht wird. Zwecks einer lokalen Verstärkung können auch Umkehrungen und damit verbundene Übergänge der Faserlagen ineinander in anderen Bereichen der Felge bzw. der Radscheibe vorgesehen sein.

Die Faserlagen verlaufen somit vorzugsweise wenigstens teilweise unterbrechungsfrei aus dem Felgenbett, über ein, insbesondere das äußere, Felgenhorn in die Radscheibe. Der Begriff "teilweise" beschreibt hier, dass nicht alle Faserlagen sondern mindestens eine derartig verläuft. Es können auch Faserlagen existieren, die lediglich im Felgenbett oder lediglich in der Radscheibe verlaufen.

Je nach Herstellungsverfahren können die Faserlagen dabei aus Geflecht, Gewebe, Gestrick oder Gelege bestehen. Besonders bevorzugt sind die Faserlagen aus geflochtenen Endlosfasern aufgebaut.

Bei der Herstellung einer als Radstern ausgeformten Radscheibe können darüber hinaus ein oder mehrere Faserlagen nur auf Teilen des Umfangs des Rades abgelegt werden. Diese lückenhaft in verschiedenen Bereichen entlang des Umfangs abgelegten Faserlagen, bilden einzelne kreissegmentartige Verbindungen zwischen Felgenbett und Radnabe. Besonders bevorzugt handelt es sich dabei bei diesen Faserlagen um textile Patches bzw. Gelege.

Da die Faserlagen vorzugsweise wenigstens zu einem Teil ihrer Anzahl unterbrechungsfrei zwischen Felgenbett und Radscheibe verlaufen, weisen diese im Bereich des Felgenhorns, an das sich die Radscheibe anschließt, ebenfalls eine Änderung ihrer Ausdehnung bzw. Orientierung auf. Die Faserlagen sind im Bereich des Felgenbetts als äußere radiale Begrenzungs- oder Mantelfläche eines Hohlzylinders rotationssymmetrisch um die durch die Radnabe definierte Rotationsachse orientiert. Sie bilden bevorzugt mehrere radial übereinander angeordnete Lagen. Im Bereich der Radscheibe sind die Faserlagen im Wesentlichen in axialer Richtung übereinander angeordnet. Im Wesentlichen bedeutet, dass es aus Gründen der optischen Gestaltung oder verbesserter Kraftaufnahme zu Wölbungen, Strukturierungen oder Neigungen bis zu 15° aus der Ebene, in der das sich anschließende Felgenhorn liegt, kommen kann. Um die unterschiedliche Orientierung der Faserlagen in Felgenbett und Radscheibe zu ermöglichen, ist wenigstens ein Teil der Faserlagen im Bereich des sich anschließenden Felgenhorns radial nach innen umgelegt.

Durch den Aufbau von Felgenbett und Radscheibe aus wenigstens teilweise gemeinsamen Endlosfasern entsteht so vorteilhaft ein Rad mit hochfest angebundener Radscheibe, bei dem die auf die Radscheibe wirkenden Kräfte und Momente optimal auf das Felgenbett übertragen werden. Insbesondere im Anbindungsbereich der Radscheibe an das Felgenbett weist das Rad somit eine höhere Stabilität im Vergleich zu einer mehrteiligen Felgenkonstruktion auf. Da die Fasern erfindungsgemäß am axial äußersten Punkt des Felgenbetts radial nach innen umgelegt sind, findet die Orientierungsänderung der Faserlagen im Bereich des Felgenhorns statt. Um seine Funktion, die seitliche Stabilisierung des Reifens auf dem Felgenbett, zu erfüllen weist dieses Felgenhorn eine größere radiale Ausdehnung auf als das Felgenbett. Um diese Umfangsänderung zu realisieren, sind die Faserlagen des Felgenbetts an der axial nach innen gerichteten Flanke dieses Felgenhorns bevorzugt in nahezu radialer Richtung nach außen orientiert. Durch das Umlegen der Faserlagen radial nach innen im Bereich der Radscheibe findet auch an diesem Felgenhorn eine Umkehr der Faserorientierung statt, jedoch ohne dass aufeinander abgelegte Faserlagen ineinander übergehen. Vorteilhaft weisen die Faserlagen auch an diesem Umkehrpunkt im konsolidierten Zustand eine erhöhte Stabilität auf, wodurch auch an dem stark beanspruchten Felgenhorn eine erhöhte Festigkeit erzielt wird.

Weiterhin bevorzugt ist die Ausgestaltung der radial nach innen umgelegten Faserlagen als Flansch zur Befestigung einer inneren Radscheibe oder eines Radkranzes. Dazu weisen die radial nach innen umgelegten Faserlagen eine geringere Ausdehnung in radialer Richtung auf, als bei der Ausbildung einer vollständigen Radscheibe. Somit bilden die Faserlagen einen am Felgenhorn ansetzenden, überwiegend radial nach innen orientierten Rand. Besonders bevorzugt weist der Flansch Mittel zur Befestigung der Radscheibe bzw. des Radsternes auf. Diese werden entweder bereits im Herstellungsprozess in den Flansch integriert oder nach der Konsolidierung der Felge, bspw. durch Bohrung, eingebracht.

Die radial nach innen umgelegten Faserlagen sind bevorzugt so angeordnet, dass die daraus gebildete Radscheibe umlaufend, also als Vollscheibe im eigentlichen Sinn, oder in Form einzelner Kreisscheibensegmente, also als Radstern, vorliegt. Im Fall einzelner Kreisscheibensegmente sind diese besonders bevorzugt unterschiedlich ausgeformt, sowohl was deren Breite als auch deren radiale Ausdehnung angeht.

Bei der Ausgestaltung der nach innen umgelegten Faserlagen als Radstern in Form kreissegmentartiger Verbindungen zwischen Felgenbett und Radnabe bzw. Radaufhängung, weisen die Faserlagen in der radial nach innen ausgedehnten Ebene der Radscheibe Durchbrechungen auf, die sich in radialer Richtung maximal vom Felgenhorn zur der Radnabe bzw. der Radaufhängung erstrecken. Darüber hinaus können die Durchbrechungen senkrecht zur radialen Richtung beliebige Ausmaße aufweisen, solange durch die radial nach innen umgelegten Faserlagen dennoch eine ausreichend stabile Verbindung zwischen Felgenbett und Radnabe gebildet wird.

Die Orientierung der Endlosfasern innerhalb der einzelnen Faserlagen kann zwischen verschiedenen Faserlagen variieren. Bevorzugt weisen die Endlosfasern in den Faserlagen im Bereich des Felgenbetts einen anderen Winkel in Bezug auf die axiale Richtung des Rades auf, als die Endlosfasern im Bereich der Radscheibe in Bezug auf die radiale Richtung des Rades. Dabei ist die Ausrichtung der Fasern im Felgenbett vor allem durch die angestrebten mechanischen Eigenschaften des Felgenbetts bestimmt. Die Ausrichtung der Endlosfasern im Bereich der radial nach innen umgelegten Faserlagen dient der Bereitstellung einer hochfesten Radscheibe mit einer optimalen Kraftübertragung zum Felgenbett.

Die Endlosfasern der Faserlagen im Bereich des Felgenbetts weisen einen Faserwinkel von 0° bis ± 90° auf, bevorzugt ± 3° bis ± 87° und weiterhin bevorzugt ± 30° bis ± 70° bezogen auf die axiale Richtung der Felge auf. Bei der Verwendung von geeigneten textilen Halbzeugen, wie z.B. unidirektionalen Schläuchen oder Geflecht mit Stehfäden (mit einem Faserwinkel 0° bezogen auf die axiale Richtung des Rades), können die Winkel der Endlosfasern relativ zur axialen Richtung des Rades vorteilhaft ± 0 bis ± 90° betragen. Besonders bevorzugt ist eine Variation der Faserwinkel der Endlosfasern in verschiedenen Faserlagen des Felgenbetts, da so vorteilhaft eine bessere Widerstandsfähigkeit des Rades gegenüber wechselnden Belastungen erzielt wird. So können Faserlagen, deren Fasern nahezu parallel zur axialen Richtung des Rades orientiert sind, insbesondere seitlich auf die Felgenhörner wirkende Stoßbelastungen aufnehmen. Faserlagen, deren Endlosfasern nahezu senkrecht zur axialen Richtung des Rades orientiert sind, können vorteilhaft besonders bei Beschleunigungs- oder Bremsvorgängen auftretende Torsionskräfte aufnehmen.

Die Endlosfasern der Faserlagen im Bereich der Radscheibe weisen einen Faserwinkel von ± 3° bis ± 87°, bevorzugt ± 10° bis ± 80°, weiterhin bevorzugt ± 20° bis ± 75° und weiterhin bevorzugt ± 30° bis ± 70° bezogen auf die radiale Richtung des Rades auf. Bei der Verwendung von textilen Halbzeugen können die Winkel der Endlosfasern relativ zur radialen Richtung der Felge auch von ± 0 bis ± 90° betragen. Die Übertragung von Drehmomenten von der Nabe auf die Reifen beansprucht die Räder weniger als die Impact-Belastungen bei der Durchfahrung von Schlaglöchern oder Unebenheiten. Diese impulsartigen Belastungen können durch eine Faserausrichtung nahezu in radialer Richtung des Rades besonders gut über die Radscheibe zur Nabe bzw. Radaufhängung übertragen werden. Eine noch bessere Stabilität des Rades wird bevorzugt dadurch erreicht, dass die Fasern von verschiedenen Faserlagen voneinander abweichende Orientierungen aufweisen. Weiterhin bevorzugt erfolgt die Anpassung des Faserverlaufs in den einzelnen Schichten des erfindungsgemäßen Felgenbetts entsprechend den zu erwartenden mechanischen Belastungen. Die Anpassung erfolgt dabei vorrangig durch Einstellung der Faserorientierung, durch Anpassung der Schichtdicke sowie gegebenenfalls durch Einbringen zusätzlicher textiler Einleger zwischen den Faserlagen an erwartungsgemäß besonders belasteten Stellen. Weiterhin kann durch die Einstellung der Position der Umkehrpunkte der Faserablage eine verstärkte Faserablage in bestimmten Bereichen des Felgenbetts oder der Radscheibe erfolgen.

In einer besonders bevorzugten Ausführung weist die Radscheibe des erfindungsgemäßen Rades einen Abschnitt zur Befestigung des Rades an der Radnabe auf. Dieser Abschnitt kann sich durch eine besondere Ausrichtung der Faserlagen relativ zur radialen Richtung des Rades auszeichnen, wie bspw. bei einer Zentrierfläche. Weiterhin kann der Abschnitt Befestigungsmittel, bspw. Schraubenlöcher oder einen Zentralverschluss enthalten.

Weiterhin bevorzugt weist das erfindungsgemäße Rad im axialen Bereich zwischen dem sich an die Radscheibe anschließenden Felgenhorn und Felgenbett, insbesondere Felgentiefbett, bzw. im hinterschnittenen Bereich des sich an die Radscheibe anschließenden Felgenhorns mindestens einen vollständig oder teilweise umlaufenden Hohlraum auf. Dieser Hohlraum ist bevorzugt vollständig von Faserlagen begrenzt, wobei besonders bevorzugt die axial äußere Begrenzung des Hohlraums durch die Radscheibe gebildet wird, die radial innere Begrenzung des Hohlraums in das Felgenbett, insbesondere das Felgentiefbett, übergeht und die radial äußere Begrenzung des Hohlraums durch das Profil des Felgenbetts vom Felgenhorn in Richtung zur Felgenmitte, insbesondere bis zum Felgentiefbett, gebildet wird. Ist der Hohlraum nur teilweise umlaufend, so befinden sich zusätzliche Begrenzungen zwischen den einzelnen Hohlräumen. Die derartige Ausgestaltung des Hohlraums führt vorteilhaft zu einer Festigkeitserhöhung im Bereich des Hohlprofils bei gleichzeitig niedrig bleibendem Gewicht. Des Weiteren stellt die den Hohlraum radial innen begrenzende Faserlage eine zusätzliche Verbindung von Felgenbett und Radscheibe dar. Da die Endlosfasern dabei keine nahezu vollständige Richtungsumkehr erfahren, führt diese Verbindung vorteilhaft zu einer besseren Kraftübertragung zwischen Radscheibe und Felgenbett.

Weiterhin bevorzugt ist im hinterschnittenen Bereich des sich an die Radscheibe anschließenden Felgenhorns mindestens ein vollständig oder teilweise umlaufender verlorener Kern integriert. Dieser kann wie der bereits beschriebene Hohlraum vollständig oder aber nur teilweise von Faserlagen begrenzt sein. Ist der mindestens eine verlorene Kern teilweise von Faserlagen begrenzt, wird die axial äußere Begrenzung des Hohlraums durch die Radscheibe und die radial äußere Begrenzung des Hohlraums durch das Profil des Felgenbetts vom sich an die Radscheibe anschließenden Felgenhorn in Richtung der Felgenmitte, insbesondere bis zum Tiefbett, gebildet. Die Haftung des verlorenen Kerns wird dann durch Formschlüssigkeit oder durch Stoffschlüssigkeit, bspw. durch Einsatz von Klebemittel oder durch die Konsolidierung, erreicht. Ist ein nur teilweise umlaufender Kern integriert, können sich zwischen den einzelnen Kernsegmenten zusätzliche Begrenzungen befinden. Bevorzugt besteht der verlorene Kern aus Kunststoff, geschäumtem Kunststoff oder metallischen Werkstoffen. Durch die Integration eines verlorenen Kerns wird vorteilhaft die Festigkeit der Felge im Bereich des sich an die Radscheibe anschließenden Felgenhorns erhöht. Bei der Ausformung der radial nach innen umgelegten Faserlagen als Flansch sind in den Kern bevorzugt Mittel zur Befestigung der Radscheibe bzw. des Radsterns integriert.

Weiterhin Gegenstand der Erfindung ist ein Verfahren zur Herstellung eines Rades aus Faserverbundwerkstoff.

Erfindungsgemäß kommt dabei ein mehrteiliges Kernwerkzeug zum Einsatz. Dieses umfasst einen zylinderartigen Felgenbettkern, dessen radiale Begrenzungsfläche der Kontur des Felgenbetts der herzustellenden Felge entspricht. Darüber hinaus entspricht eine axiale Begrenzungsfläche des Felgenbettkerns der Kontur der Radscheibe des herzustellenden Rades. An diese axiale Begrenzungsfläche schließt sich an den Felgenbettkern ein, mit diesem lösbar verbundener Hilfskern an, der in axialer Richtung, insbesondere entlang der Rotationssymmetrieachse des Kernwerkzeugs, verschiebbar ist und in radialer Richtung mit dem Felgenbettkern annähernd abschließt.

Auf diesem Kernwerkzeug erfolgt die Ablage von mindestens einer Lage Fasermaterial, so dass die Fasern auf dem Umfang des Kernwerkzeugs, und in axialer Richtung auf Felgenbettkern und Hilfskern, formschlüssig abgelegt werden. Dadurch wird die radiale Begrenzungsfläche des Kernwerkzeugs schlauchartig von Fasermaterial umspannt. Die Ablage des Fasermaterials auf dem Kernwerkzeug erfolgt im erfindungsgemäßen Verfahren mittels Drapierung von Multiaxialgelegen, Gelegezuschnitten oder Gewebelagen auf dem Kernwerkzeug, durch Umwickeln des Kernwerkzeugs mit Bandgeflecht oder flachgedrücktem Rundgeflecht und/oder durch Umflechten des Kernwerkzeugs mit Flechtfäden.

Nach der Ablage der Fasern auf dem mehrteiligen Kernwerkzeug, wird der Hilfskern, vom Felgenbettkern entfernt, insbesondere in axialer dem Felgenbettkern abgewandter Richtung verschoben, wobei diese Bewegung des Hilfskerns dabei soweit erfolgt, bis dieser vollständig aus dem schlauchartig auf dem Hilfskern abgelegten Fasermaterial herausgezogen ist. Dadurch entsteht ein über den Felgenbettkern überstehendes Ende des schlauchförmigen Fasermaterials.

In einem nächsten Verfahrensschritt wird das zuvor auf dem Hilfskern abgelegte Fasermaterial in radialer Richtung nach innen umgelegt und an die axiale Begrenzungsfläche des Felgenbettkerns angeformt. Dadurch erfolgt die formschlüssige Ablage von Endlosfasern, die ebenfalls formschlüssig an der radialen Begrenzungsfläche des Felgenbettkerns anliegen, an dessen, die Kontur der Radscheibe abbildende, Stirnfläche. Somit wird eine an den Felgenbettkern formschlüssig angeformte Faserpreform aus Endlosfasern geschaffen, die die Kontur der herzustellenden Felge, umfassen Felgenbett und Radscheibe, aufweist.

In einer ebenfalls bevorzugten Ausführungsform des Verfahrens erfolgt die Ablage des Fasermaterials nur im Bereich des Felgenbettkerns entlang dessen gesamten Umfangs. Im Bereich des Hilfskerns werden dagegen Faserlagen lückenhaft entlang des Umfangs des Felgenbettkerns abgelegt. Durch das Umlegen dieser lückenhaft abgelegten Faserlagen radial nach innen wird eine als Radstern ausgebildete Radscheibe erzeugt. Bevorzugt kommen textile Patches bzw. Gelege bei der lückenhaften Ablage von Faserlagen entlang des Umfangs des Felgenbettkerns zum Einsatz.

Zur Herstellung des eigentlichen Rades aus Faserverbundwerkstoff, wird die auf dem Felgenbettkern abgelegte Faserpreform, in ein mehrteiliges, bevorzugt metallische Außenwerkzeug eingelegt. Ist die Preform eingelegt, wird das Außenwerkzeug geschlossen, und das Fasermaterial mit dem duro- oder thermoplastischen Matrixwerkstoff konsolidiert Dabei wird bevorzugt der Matrixwerkstoff mit einem bestimmten Druck und einer bestimmten Temperatur, in das Werkzeug eingespritzt. Im Werkzeug kommt es durch die Verbindung von Matrixwerkstoff und Faserpreform, bevorzugt unter bestimmten Druck-Temperaturbedingungen, während eines bestimmten Zeitraums zur Konsolidierung des Faserverbundwerkstoffs. Nach der Aushärtung des Matrixwerkstoffs wird das fertige Rad, umfassend Felgenbett und angeformte Radscheibe, aus dem Außenwerkzeug entnommen. Die bei der Konsolidierung tatsächlich einzusetzenden Parameter von Druck und Temperatur hängen von den verwendeten Materialien ab. Da es sich um Materialien aus dem Stand der Technik handelt, sind diese Parameter dem Fachmann bekannt.

In einer bevorzugten Ausführungsform wird den Fasern während der Faserablage ein thermo- oder duroplastischer Binder zugefügt, Dies kann beispielsweise in Pulverform, aber auch durch Verwendung imprägnierter Fasern erfolgen. Nach der Faserablage wird die Faserpreform anschließend vorkonsolidiert. Bei der bevorzugten Verwendung von thermoplastischem Binder kann dies beispielsweise technologisch einfach und kostengünstig mit einem Heißluftgebläse erfolgen. Nach der Vorkonsolidierung kann das Kernwerkzeug dann aus der Faserpreform entnommen werden. Zu einem späteren Zeitpunkt erfolgt dann ein Einlegen der Faserpreform in das Konsolidierungswerkzeug und die Konsolidierung des Rades. Diese Vorgehensweise bietet mehrere Vorteile. So muss im Rahmen einer Serienfertigung nur eine deutlich geringere Anzahl an sehr kostenintensiven Kernwerkzeugen vorgehalten werden. Durch die im Vergleich zum Einlegen der Preform mit Kernwerkzeug geringere notwendige Anzahl an Dichtungslinien am Konsolidierungswerkzeug, ist dies deutlich einfacher aufgebaut und daher ebenfalls kostengünstiger. Nicht zuletzt kann in dieser Ausführungsform eine Entkopplung der Faserablage und der Konsolidierung erreicht werden.

In einer alternativen Ausgestaltung des Verfahrens wird die Faserpreform mit dem Kernwerkzeug in das Konsolidierungswerkzeug eingelegt. Bei dieser Ausführungsform ist vorteilhaft eine Zugabe eines Binders während der Faserablage nicht notwendig, ebenso wie eine Vorkonsolidierung.

Bevorzugt kommt im erfindungsgemäßen Verfahren ein RTM, Resin Transfer Moulding, Werkzeug aus Kunststoff oder bevorzugt aus metallischen Werkstoffen zum Einsatz. Das Einspritzen des Matrixwerkstoffs erfolgt bevorzugt über ein oder mehrere Harzinjektionsports, die bevorzugt punkt-, linien- oder kanalförmig im Werkzeug angeordnet sind.

In einer bevorzugten Ausführungsform des erfindungsgemäßen Verfahrens erfolgt das Umlegen und Anformen des schlauchförmigen Fasermaterials an die axiale Begrenzungsfläche des Felgenbettkerns mit Hilfe des Hilfskerns. Dabei wird dieser, nachdem er aus dem schlauchförmig darauf abgelegten Fasermaterial in axiale Richtung herausbewegt wurde, wieder axial zurück in Richtung des Felgenbettkerns bewegt. Durch die axiale Begrenzungsfläche des Hilfskerns werden die Endlosfasern dadurch an die axiale Begrenzungsfläche des Felgenbettkerns angeformt. Dabei sind die axialen, zueinander gerichteten Begrenzungsflächen von Felgenbettkern und Hilfskern bevorzugt als formideale Gegenstücke ausgebildet, um so vorteilhaft eine besonders formschlüssige und gleichmäßige Faserablage mit möglichst wenigen Lufteinschlüssen zu ermöglichen. Ebenfalls bevorzugt ist eine besondere Ausgestaltung der radialen Begrenzungsfläche des Hilfskerns, wodurch vorteilhaft eine der gewünschten Geometrie der Radscheibe bereits angepasste Ablage von Fasermaterial erfolgt. Mit einem soliden Hilfskern ist dabei eine Verkleinerung des Umfangs nur in der vom Felgenbettkern abgewandter Richtung möglich, da ansonsten das Herausziehen des Hilfskerns aus dem Fasermaterial in diese Richtung nicht durchführbar ist.

Weiterhin bevorzugt, ist der Hilfskerns so ausgestaltet, das sein Volumen veränderbar einstellbar ist. Dadurch ist eine Verkleinerung des Umfangs des Hilfskerns auch in der vom Felgenbettkern abgewandten Richtung möglich. Weist ein Hilfskerns eine derartige Form bei der Ablage des Fasermaterials auf, so wird dessen Volumen vor dem Herausziehen aus dem schlauchförmigen Fasermaterial geeignet verkleinert. Ein solcher Hilfskern weist bevorzugt eine konische, sich in die vom Felgenbettkern abgewandte Richtung verjüngende Kontur auf. Dadurch erfolgt entlang dieser Richtung vorteilhaft die Ablage von weniger Fasermaterial, was beim Umlegen und Anformen des Fasermaterials auf die axiale Begrenzungsfläche des Felgenbettkerns vorteilhaft eine verminderte Faltenbildung des Fasermaterials bewirkt. Besonders bevorzugt weist die radiale Begrenzungsfläche darüber hinaus eine stufenförmige Verkleinerung des Umfangs in der vom Felgenbettkern abgewandten Richtung auf. Dies ermöglicht vorteilhaft das besonders formschlüssige Anformen der Fasern an die, eine Zentrierfläche der Radscheibe abbildende, axiale Begrenzungsfläche des Felgenbettkerns. Ein derartiger Hilfskerns ist zur steuerbaren Veränderung seines Volumens bevorzugt aufblasbar oder mit einem Fluid füllbar ausgestaltet oder elastisch und stabilisierbar ausgebildet.

Weiterhin bevorzugt ist der Felgenbettkern selbst ebenfalls mehrteilig, insbesondere zweiteilig aufgebaut und besteht insbesondere aus einem ersten und einem zweiten Teil. Dabei bildet der erste Teil des Felgenbettkerns das Profil des Felgenbetts der herzustellenden Felge im Bereich des sich nicht an die Radscheibe anschließenden Felgenhorns und des Felgentiefbetts ab. Der zweite Teil des Felgenbettkerns bildet dann das Profil des Felgenbetts im hinterschnittenen Bereich des sich an die Radscheibe anschließenden Felgenhorns, also insbesondere von diesem Felgenhorn bis zum Beginn des Felgentiefbetts, ab. Beide Teile des Felgenbettkerns sind dabei bevorzugt zueinander formschlüssig konstruiert und lösbar miteinander verbindbar. Insbesondere ist der zweite Teil des Felgenbettkerns in Form eines Kreisrings auf den ersten Teil des Felgenbettkerns aufschieb- bzw. -pressbar oder in Form einzelner Kreissegmente an diesem montierbar. Besonders bevorzugt weist der erste Teil des Felgenbettkerns dazu eine Montagefläche, besonders bevorzugt Befestigungsmittel, für den zweiten Teil des Felgenbettkerns auf und erstreckt sich somit, wie ein einteiliger Felgenbettkern, über die gesamte Breite des Felgenbetts des herzustellenden Rades in axialer Richtung. Im Bereich der Montagefläche des zweiten Teils, weist der erste Teil des Felgenbettkerns besonders bevorzugt einen ähnlichen Umfang wie im Bereich des Felgentiefbetts auf und/oder einen annähernd zylindrische und, abgesehen von Befestigungsmitteln für den zweiten Teil des Felgenbettkerns, unprofilierte Außenform auf.

Der mehr- bzw. zweiteilige Aufbau des Felgenbettkerns aus lösbar miteinander verbindbaren Teilen gewährleistest unter anderem vorteilhaft die Entnehmbarkeit des Felgenbettkerns aus der Faserpreform im erfindungsgemäßen Verfahren. Aufgrund des einteiligen Aufbaus des herzustellenden Rades ist eine Seite des Rades mit der Radscheibe zumindest teilweise verschlossen. Somit ist der Felgenbettkern nur aus der gegenüberliegenden Seite entnehmbar. Dies wird bei einem einteiligen Aufbau des Felgenbettkerns jedoch durch den hinterschnittenen Bereich des sich an die Radscheibe anschließenden Felgenhorns erschwert bzw. unmöglich gemacht. Bei einem zweiteiligen Aufbau des Felgenbettkerns wird dagegen zuerst der erste Teil des Felgenbettkerns in axialer Richtung aus der Faserpreform entnommen. Dadurch kann der zweite Teil des Felgenbettkerns in radialer Richtung aus dem hinterschnittenen Bereich des Felgenhornes entnommen werden und ist dann ohne weiteres in axialer Richtung aus der Faserpreform entfernbar.

Um die Entnehmbarkeit des Felgenbettkerns aus der Faserpreform zu ermöglichen sind weitere Ausgestaltungen eines ein- oder mehrteiligen Felgenbettkerns bevorzugt. Dieser ist bevorzugt segmentiert aufgebaut, wobei besonders bevorzugt die den zweiten Teil des Felgenbettkerns bildenden Segmente in dem ersten Teil des Felgenbettkerns versenkbar sind. Ebenfalls bevorzugt ist eine aufblasbare Ausgestaltung des Felgenbettkerns, insbesondere des zweiten Teils bei einem zweiteiligen Aufbau, oder die Ausfüllbarkeit des Kerns mit einem Fluid. Dies ermöglicht ebenfalls vorteilhaft die Entnehmbarkeit des Felgenbettkerns, in dem nach der Ablage des Fasermaterials dessen Volumen verkleinert wird. Darüber hinaus ist auch ein Felgenbettkern bevorzugt, der elastisch und stabilisierbar ausgeführt ist und bspw. aus einem elastischen äußeren Kern, bspw. aus elastischem Kunststoff besteht der durch Hereinschieben des ersten Teils des Felgenbettkerns ausreichend für die Faserablage stabilisiert wird. Die Entnehmbarkeit des Felgenbettkerns kann weiterhin vorteilhaft ermöglicht werden, wenn der zweite Teil des Felgenbettkerns, insbesondere materialtechnisch, so angelegt ist, dass er als verlorener Kern in der Felge verbleibt oder durch Einwirken eines Mediums, bzw. Wärme schrumpf- oder auflösbar ist.

In einer besonders bevorzugten Ausführungsform wird das erfindungsgemäße Verfahren zunächst nur unter der Verwendung eines Kernwerkzeugs, bestehend aus Hilfskern und ersten Teil des Felgenbettkern ausgeführt. Dabei wird besonders bevorzugt ein Hilfskern verwendet, der mit dem ersten Teil des Felgenbettkerns in radialer Richtung, insbesondere in Höhe des Felgentiefbetts, annähernd abschließt. Dadurch kann wie bereits beschrieben das Umlegen und formschlüssige Anformen des abgelegten Fasermaterials auf der, das Profil der Radscheibe abbildenden, axialen Begrenzungsfläche des ersten Teil des Felgenbettkerns erfolgen. Danach wird der zweite Teil des Felgenbettkerns so auf dem ersten Teil des Felgenbettkerns und den darauf abgelegten Faserlagen befestigt, dass er mit diesen an deren axial äußerer Begrenzungsfläche abschließt. Besonders bevorzugt wird als zweiter Teil des Felgenbettkerns ein Kreisring verwendet, der auf den ersten Teil des Felgenbettkerns aufgeschoben wird. Der erste Teil des Felgenbettkerns ist dazu bevorzugt an seinem äußeren Ende leicht konisch und der zweite Teil des Felgenbettkerns als formideales Gegenstück aufgebaut, um so das Aufschieben des zweiten Teils des bis zu einem bestimmten Punkt zu ermöglichen. Ist der zweite Teil des Felgenbettkerns angebracht, wird gemäß dem erfindungsgemäßen Verfahren erneut Fasermaterial auf diesem sowie einem Hilfskern abgelegt. Dabei wird bevorzugt ein Hilfskern verwendet, der in radialer Richtung mit dem zweiten Teil des Kerns, insbesondere in Höhe des sich an die Radscheibe anschließenden Felgenhorns, abschließt. Dies ermöglicht vorteilhaft das Umlegen und formschlüssige Anformen des abgelegten Fasermaterials auf der, das Profil der Radscheibe abbildenden, axialen Begrenzungsfläche des zweiten Teils des Felgenbettkerns sowie den bereits auf dem ersten Teil des Kerns abgelegten Faserlagen. Nach der Ablage sowie dem Umformen der Faserlagen, kann der erste Teil des Felgenbettkerns problemlos in axialer Richtung aus der Faserpreform entfernt werden, bevor diese in einem mehrteiligen Außenwerkzeug konsolidiert wird. Der zweite Teil des Felgenbettkerns verbleibt bevorzugt als verlorener Kern in der Felge oder wird durch Einwirkung eines Mediums aufgelöst und das Material bevorzugt über dafür vorgesehene Öffnungen in der Preform abgelassen. So entsteht vorteilhaft ein mit dem verlorenen Kern gefüllter oder ungefüllter Hohlraum im Bereich des sich an die Radscheibe anschließenden Felgenhorns und des Felgenbetts, was eine vorteilhafte Erhöhung der Festigkeit der Felge in diesem Bereich bewirkt.

### Ausführungsbeispiele

Nachfolgend wird die Erfindung anhand von drei Ausführungsbeispielen erläutert.

Dabei zeigen:

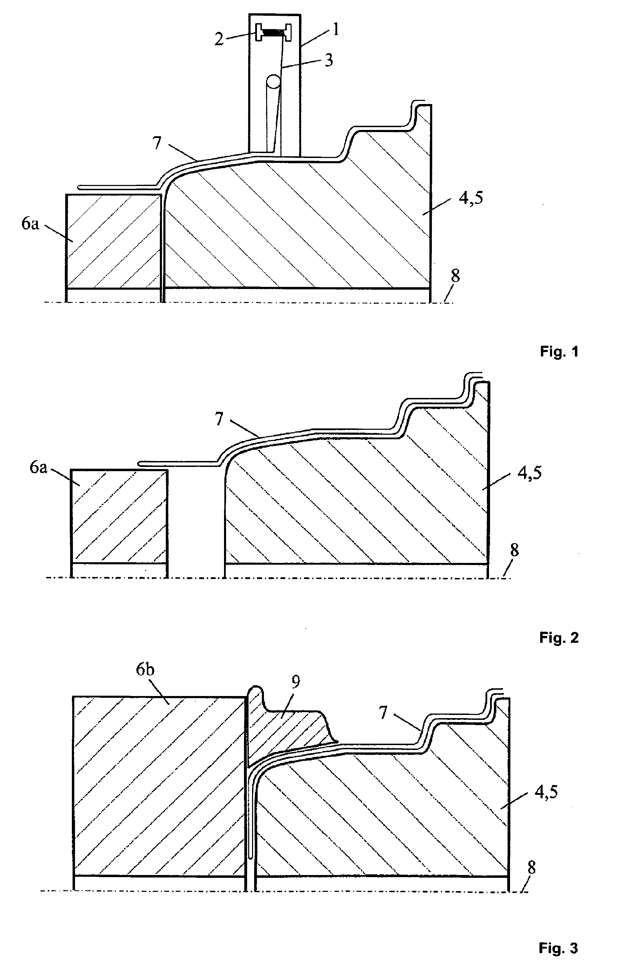

- **Fig. 1:**: das Ablegen einer ersten Lage Fasermaterial auf einem mehrteiligen Kernwerkzeug, bestehend aus innerem Felgenbettkern und erstem zylindrischen Hilfskern mittels einer Radialflechtmaschine,
- **Fig. 2:**: das axiale Herausziehen des ersten zylindrischen Hilfskerns aus dem schlauchförmig darauf abgelegtem Fasermaterial
- **Fig**. **3:**: den inneren Felgenbettkern mit einer formschlüssig darauf abgelegten und angeformeten ersten Lage Fasermaterial sowie dem auf diesen Faserlagen und dem inneren Kern montiertem äußeren Felgenbettkern
- **Fig**. **4:**: das Ablegen einer zweiten Lage Fasermaterial auf einem mehrteiligen Kernwerkzeug, bestehend aus innerem und äußerem Felgenbettkern sowie zweitem zylindrischen Hilfskern mittels einer Radialflechtmaschine,

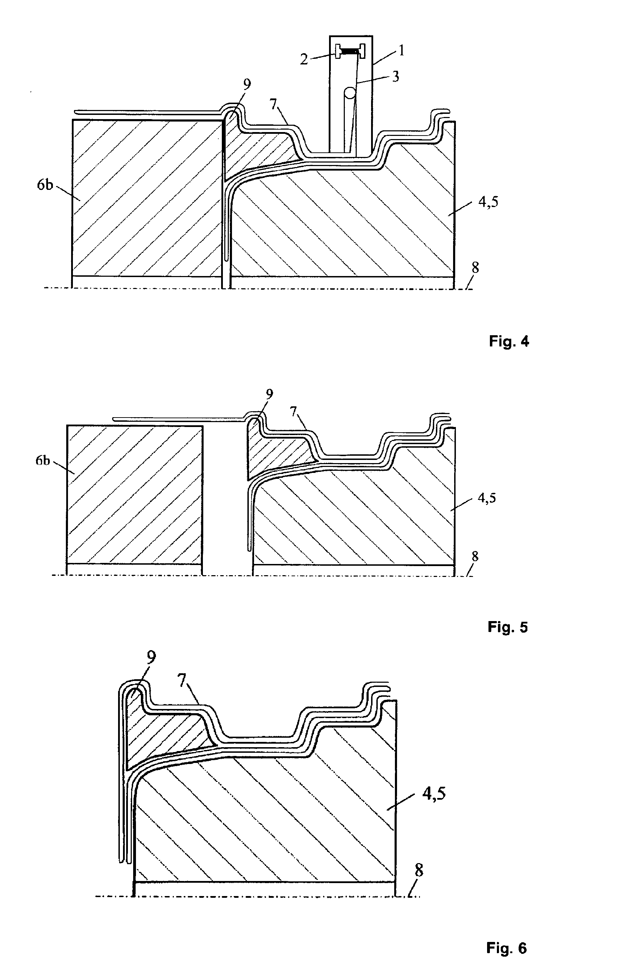

- **Fig. 5:**: das axiale Herausziehen des zweiten zylindrischen Hilfskerns aus dem schlauchförmig darauf abgelegtem Fasermaterial
- **Fig. 6:**: den inneren Felgenbettkern mit einer formschlüssig darauf abgelegten und angeformeten ersten Lage Fasermaterial sowie dem auf diesem Fasermaterial und dem inneren Kern montiertem äußeren Felgenbettkern mit einer formschlüssig darauf abgelegten und angeformeten zweiten Lage Fasermaterial

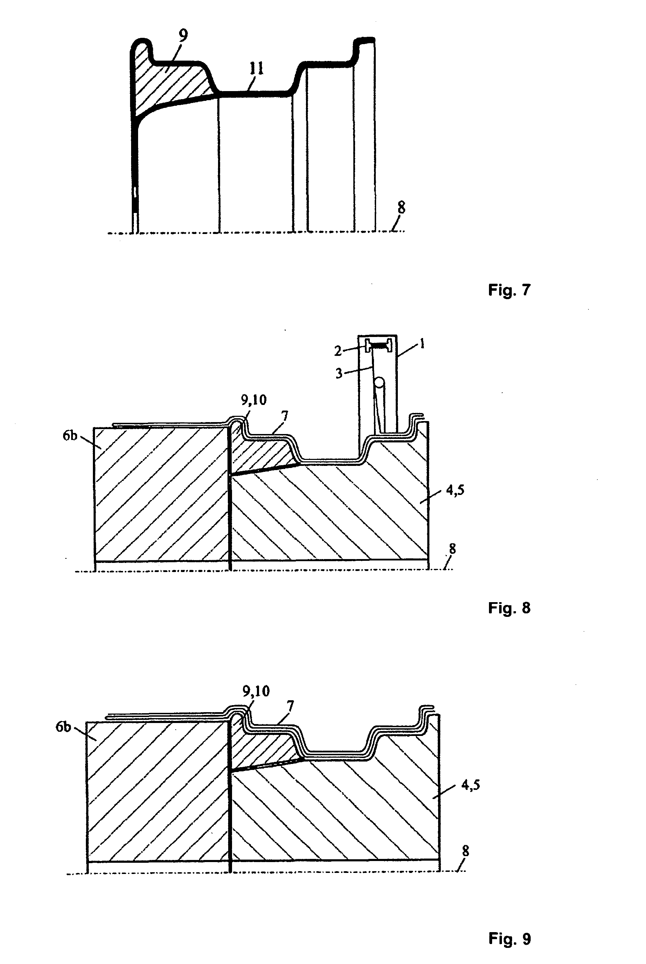

- **Fig. 7:**: einen Querschnitt eines Felgenprofils, umfassend Felgenbett und Radscheibe, mit im Bereich des äußeren Felgenhorns befindlichem, von Fasermaterial eingefasstem verlorenem Kern
- **Fig**. **8:**: das Ablegen einer ersten Lage Fasermaterial auf einem mehrteiligen Kernwerkzeug, bestehend aus innerem und äußerem Felgenbettkern und einem zylindrischen Hilfskern mittels einer Radialflechtmaschine,
- **Fig**. **9:**: das Ablegen einer zweiten Lage Fasermaterial auf einem mehrteiligen Kernwerkzeug, bestehend aus innerem und äußerem Felgenbettkern und einem zylindrischen Hilfskern mittels einer Radialflechtmaschine,

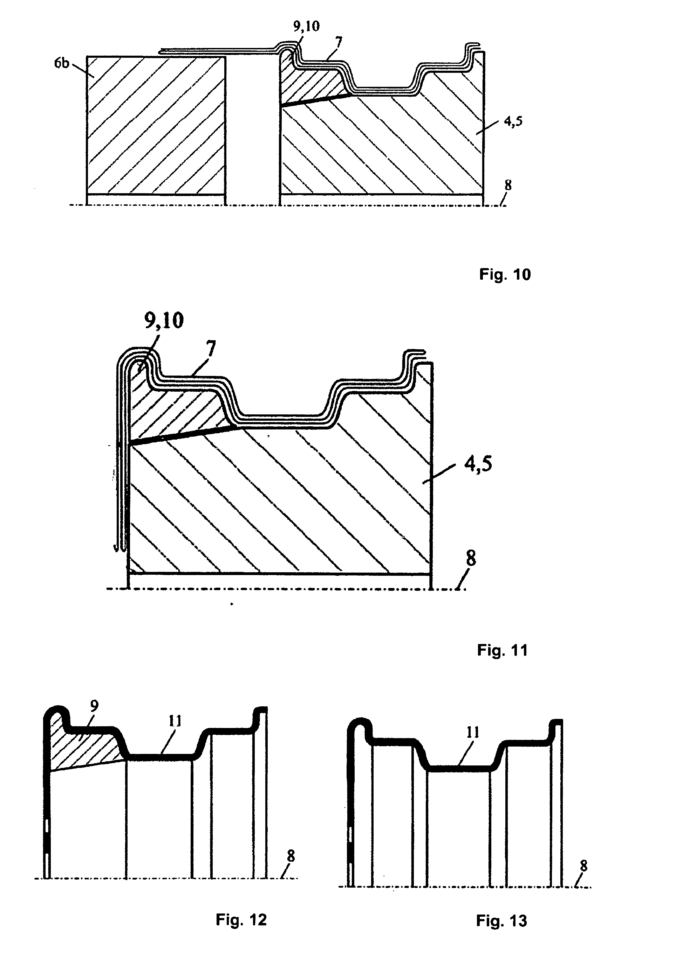

- **Fig. 10:**: das axiale Herausziehen des zylindrischen Hilfskerns aus dem schlauchförmig darauf abgelegtem Fasermaterial
- **Fig. 11:**: den inneren und äußeren Felgenbettkern mit formschlüssig darauf abgelegtem und angeformtem Fasermaterial
- **Fig. 12:**: einen Querschnitt eines Felgenprofils, umfassend Felgenbett und Radscheibe, mit im Bereich des äußeren Felgenhorns befindlichem verlorenem Kern
- **Fig. 13:**: einen Querschnitt eines Felgenprofils, umfassend Felgenbett und Radscheibe

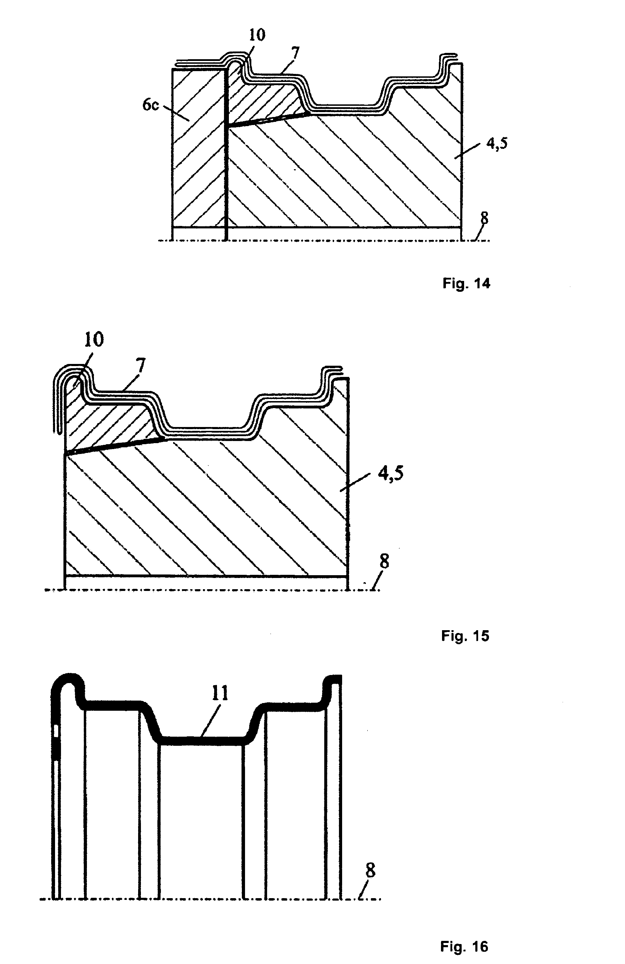

- **Fig. 14:**: auf einem mehrteiligen Kernwerkzeug, bestehend aus innerem und äußerem Felgenbettkern und zylindrischen Hilfskern, formschlüssig abgelegte Lagen von Fasermaterial
- **Fig**. **15:**: den inneren und äußeren Felgenbettkern mit einer formschlüssig darauf abgelegten und angeformeten Lage Fasermaterial
- **Fig. 16:**: einen Querschnitt eines Felgenprofils, umfassend Felgenbett und Flansch

### Ausführungsbeispiel 1

### (Fig. 1, Fig. 2, Fig. 3, Fig. 4, Fig. 5, Fig. 6, Fig. 7)

Beim ersten Ausführungsbeispiel entsteht die Radscheibe durch das Beflechten von in ihrem Durchmesser unterschiedlich großen zylindrischen Formteilen, welche als Hilfskern (6a, 6b) dienen. Dafür erfolgt zunächst die Montage des Hilfskerns (6a) im Bereich des Felgentiefbettes des Felgenbettkerns (5). Nach dem Beflechten des Hilfskerns (6a) wird dieser in Richtung der Rotationssymmetrieachse (8) entfernt und das so entstehende Fasertextil (7) durch Drapieren an den Felgenbettkern (5) angelegt. Anschließend erfolgt die Montage eines Einlegers (9) in Form eines Ringes durch formschlüssiges Aufstecken auf den beflochtenen Felgenbettkern (5). Der Einleger (9) bildet dabei die Teilkontur des Felgenbettes vom Tiefbett bis zum Felgenhorn ab. Nach der Montage des Hilfskerns (6b), welcher zusätzlich zur Fixierung des Einlegers (9) dient, erfolgt das Beflechten von Felgenbettkern (5), Einleger (9) und Hilfskern (6b). Nach dem Beflechten des Hilfskerns (6b) wird dieser in Richtung der Rotationssymmetrieachse (8) entfernt und das so entstehende schlauchförmige Fasertextil (7) durch Drapieren an den Einleger (9) und das Felgenbettkern (5) angelegt. Der Einleger (9) wird dadurch vollständig vom Fasertextil (7) umschlossen. Für die Verpressung der textilen Schichten bei der Konsolidierung kommt im Bereich des Felgenbettes und der Radscheibe ein mehrteiliges metallisches Außenwerkzeug zum Einsatz.

### Ausführungsbeispiel 2

### (Fig. 8, Fig. 9, Fig. 10, Fig. 11, Fig. 12, Fig. 13)

Bei diesem Ausführungsbeispiel entsteht die Radscheibe durch das Beflechten eines zylindrischen Formteils, welches als Hilfskern (6b) dient. Dafür erfolgt zunächst die Montage eines Einlegers (9) durch formschlüssiges Aufstecken auf den Felgenbettkern (5). Der Einleger (9) bildet dabei die Teilkontur des Felgenbettes vom Tiefbett bis zum Felgenhorn ab und ist als verlorener Kern in Form eines Ringes bzw. für eine Entformung nach der Konsolidierung aus metallischen Ringsegmenten (10) ausgeführt. Nach der Montage des Hilfskerns (6b), welcher zusätzlich zur Fixierung des Einlegers (9) bzw. der Ringsegmente (10) dient, erfolgt das textile Preforming mittels des Umflechtverfahrens auf einer Radialflechtmaschine (1). Nach dem Beflechten des Hilfskerns (6b) wird dieser in Richtung der Rotationssymmetrieachse (8) entfernt und das so entstehende Fasertextil (7) durch Drapieren an den Einleger (9) bzw. an die Ringsegmente (10) und den Felgenbettkern (5) angelegt. Für die Verpressung der textilen Schichten bei der Konsolidierung kommt im Bereich des Felgenbettes und der Radscheibe ein mehrteiliges metallisches Außenwerkzeug zum Einsatz. Der Einleger (9) verbleibt nach der Konsolidierung im Bauteil (11). Die Ringsegmente (10) hingegen werden nach der Konsolidierung entformt. Dafür wird der Felgenbettkern (5) in Richtung der Rotationssymmetrieachse (8) entfernt, woraufhin die Ringsegmente (10) in radialer Richtung entnommen werden. Für die Verpressung der textilen Schichten bei der Konsolidierung kommt im Bereich des Felgenbettes und der Radscheibe ein mehrteiliges metallisches Außenwerkzeug zum Einsatz.

### Ausführungsbeispiel 3

### (nach Fig. 14, Fig. 15, Fig. 16)

Bei diesem Ausführungsbeispiel entsteht ein Radscheibenansatz, zur Montage eines Radsterns bzw. einer Radscheibe, durch das Beflechten eines zylindrischen Formteils, welches als Hilfskern (6c) dient. Metallische Ringsegmente (10) bilden dabei die Teilkontur des Felgenbettes vom Tiefbett bis zum Felgenhorn ab. Nach der Montage des Hilfskerns (6c), welcher zusätzlich zur Fixierung der Ringsegmente (10) dient, erfolgt das textile Preforming mittels des Umflechtverfahrens auf einer Radialflechtmaschine (1). Nach dem Beflechten des Hilfskerns (6c) wird dieser in Richtung der Rotationssymmetrieachse (8) entfernt und das so entstehende Fasertextil (7) durch Drapieren an die Ringsegmente (10) angelegt. Für die Verpressung der textilen Schichten bei der Konsolidierung kommt im Bereich des Felgenbettes und der Radscheibe ein mehrteiliges metallisches Außenwerkzeug zum Einsatz. Die Ringsegmente (10) werden nach der Konsolidierung entformt. Dafür wird der Felgenbettkern (5) in Richtung der Rotationssymmetrieachse (8) entfernt, woraufhin die Ringsegmente (10) in radialer Richtung entnommen werden.

### Bezugszeichenliste

- 1: Radialflechtmaschine
- 2: Flechtklöppel
- 3: Flechtfaden
- 4: Flechtkern
- 5: Felgenbettkern
- 6a: Hilfskern 1
- 6b: Hilfskern 2
- 6c: Hilfskern 3
- 7: Fasergeflecht
- 8: Rotationssymmetrieachse
- 9: Einleger
- 10: Ringsegmentformteile
- 11: Konsolidierte Faserpreform

## Patentansprüche

1. Rad aus Faserverbundwerkstoff, insbesondere für Kraftfahrzeuge, aufweisend zwei Felgenhörner, ein dazwischen angeordnetes Felgenbett sowie eine in ein Felgenhorn übergehenden Radscheibe, **dadurch gekennzeichnet, dass** die Radscheibe wenigstens teilweise durch Faserlagen (7) gebildet wird, die unterbrechungsfrei aus dem Felgenbett, über ein Felgenhorn in die Radscheibe verlaufen.

2. Rad aus Faserverbundwerkstoff, nach Anspruch 1, **dadurch gekennzeichnet, dass** die Radscheibe als Radstern ausgebildet ist.

3. Rad aus Faserverbundwerkstoff, nach Anspruch 1, **dadurch gekennzeichnet, dass** die Radscheibe als Flansch ausgebildet ist, der Mittel zur Befestigung einer inneren Radscheibe bzw. eines Radsterns aufweist.

4. Rad aus Faserverbundwerkstoff nach einem der vorangehenden Ansprüche, **dadurch gekennzeichnet, dass** die Endlosfasern (3) der Faserlagen (7) im Bereich des Felgenbetts einen Faserwinkel von ± 3° bis ± 87°, bevorzugt ± 20° bis ± 75° und weiterhin bevorzugt ± 30° bis ± 70° bezogen auf die Rotationsachse des Rades aufweisen.

5. Rad aus Faserverbundwerkstoff nach einem der vorangehenden Ansprüche, **dadurch gekennzeichnet, dass** die Endlosfasern (3) der Faserlagen (7) im Bereich der Radscheibe einen Faserwinkel von ± 3° bis ± 87°, bevorzugt ± 20° bis ± 75° und weiterhin bevorzugt ± 30° bis ± 70° bezogen auf die radiale Richtung des Rades aufweisen.

6. Rad aus Faserverbundwerkstoff nach einem der vorangehenden Ansprüche, **dadurch gekennzeichnet, dass** Fasern (3) mindestens einer Faserlage (7) einen Faserwinkel von 90° bezogen auf die Rotationsachse des Rades aufweisen.

7. Rad aus Faserverbundwerkstoff nach einem der vorangehenden Ansprüche, **dadurch gekennzeichnet, dass** im Bereich zwischen Felgenhorn, Felgenbett, insbesondere Felgentiefbett, und Radscheibe ein vollständig oder teilweise um den Radumfang umlaufender sowie vollständig von Faserlagen (7) begrenzter Hohlraum ausgebildet ist.

8. Rad aus Faserverbundwerkstoff nach Anspruch 7, **dadurch gekennzeichnet, dass** der Hohlraum mindestens einen verlorenen Kern (10) oder mindestens einen Einleger (9) enthält.

9. Rad aus Faserverbundwerkstoff nach Anspruch 8, **dadurch gekennzeichnet, dass** mindestens ein Einleger (9) oder ein verlorener Kern (10) aus Schaumstoff, geschäumtem Kunststoff oder Leichtmetall besteht.

10. Rad aus Faserverbundwerkstoff, nach einem der Ansprüche 5 bis 8, **dadurch gekennzeichnet, dass** der Hohlraum durch die Radscheibe, das Felgenbett , sowie mindestens eine Faserlage die direkt vom Felgenbett, insbesondere vom Felgentiefbett, zur Radscheibe verläuft, begrenzt wird.

11. Verfahren zu Herstellung eines Rades nach einem der Ansprüche 1 bis 10 aus Faserverbundwerkstoff, **gekennzeichnet durch** folgende Verfahrensschritte:
a) Bereitstellung eines Kernwerkzeuges (4), aufweisend einen zylinderartigen Felgenbettkern (5) und ein, sich in axialer Richtung anschließender, mit dem Felgenbettkern (5) lösbar verbundener zylindrischer Hilfskern (6a), wobei die Form des Felgenbettkerns (5) der Form des Felgenbettes, der Felgenhörner und des äußeren Bereichs der Radscheibe entspricht, und der Felgenbettkern (5) derart gestaltet ist, dass er nach der Konsolidierung des Rades (11) entnehmbar ist,
b) Ablage von mindestens einer Lage Fasermaterial (7) auf dem Kernwerkzeug (4), so dass ein Schlauch von Fasermaterial (7) auf dem Kernwerkzeug (4) und den Felgenhörnern liegt,
c) Entfernen des Hilfskernes (6a), insbesondere **durch** Herausziehen in axialer Richtung, aus dem darauf abgelegten Schlauch aus Fasermaterial (7),
d) Umlegen des Fasermaterials (7), das zuvor auf dem Hilfskern (6a) abgelegt war, und Anlegen dieses Fasermaterials (7) an die Stirnseite des Felgenbettkerns (5)
e) Konsolidieren des Fasermaterials (7) mit einem Matrixwerkstoff in einem Konsolidierungswerkzeug, und
f) Entnahme des Rades (11) aus dem Konsolidierungswerkzeug.

12. Verfahren nach Anspruch 11, **dadurch gekennzeichnet, dass**
- in Schritt b) dem Fasermaterial (7) bei der Ablage zusätzlich ein Binder zugeführt wird, und nach der Faserablage dieser Binder aktiviert wird und somit das Fasermaterial vorkonsolidiert, und
- das Kernwerkzeug (4) nach der Vorkonsolidierung entfernt wird.

13. Verfahren nach Anspruch 11, **dadurch gekennzeichnet, dass**
- das Fasermaterial (7) mit dem Kernwerkzeug (4) in das Konsolidierungswerkzeug eingelegt wird, und
- das Kernwerkzeug (4) nach der Konsolidierung entformt wird.

14. Verfahren zur Herstellung eines Rades aus Faserverbundwerkstoff nach einem der Ansprüche 11 bis 13, **dadurch gekennzeichnet, dass** der Felgenbettkern (5) nach Schritt a) zur Gewährleistung der Entnehmbarkeit segmentiert aufgebaut ist.

15. Verfahren nach einem der Ansprüche 11 bis 14, **dadurch gekennzeichnet, dass** der Felgenbettkern (5)
- im hinterschnittenen Bereich des Felgenhorns aufblasbar bzw. mit einem Fluid füllbar ausgestaltet ist, oder
- im hinterschnittenen Bereich des Felgenhorns elastisch und mittels eines herausziehbaren starren Innenrings (10) stabilisierbar ausgeführt ist, und/oder
- zweiteilig ausgeführt ist, wobei ein Teil des Felgenbettkerns (5) als verlorener Kern im Rad verbleibt, oder entnehmbar ist.

16. Verfahren zur Herstellung eines Rades aus Faserverbundwerkstoff nach Anspruch 15, **dadurch gekennzeichnet, dass** der entnehmbare Teil (9) des Felgenbettkerns (5) durch Einwirkung eines Mediums, bzw. Wärme schrumpfbar oder auflösbar ist.

17. Verfahren zur Herstellung eines Rades aus Faserverbundwerkstoff, nach einem der Ansprüche 11 bis 15 **dadurch gekennzeichnet, dass**
- der Felgenbettkern (5) mehrteilig ausgeführt ist, insbesondere zweiteilig, wobei insbesondere ein erster Teil des Felgenbettkerns den Bereich vom ersten Felgenhorn in Richtung zur Felgenmitte, insbesondere bis zum Felgentiefbett, abbildet und ein zweiter, verlorener Teil (9,10), des Felgenbettkerns den verbleibenden Bereich des Felgenbettes, abbildet,
- wobei in Verfahrensschritt b) die Faserablage zuerst auf dem ersten Teil des Felgenbettkerns und dessen Kontaktfläche zum zweiten Teil (9,10) des Felgenbettkerns erfolgt, anschließend der zweite Teil (9,10) des Felgenbettkerns und der Hilfskern (6b) an den ersten Teil des Felgenbettkerns und damit an das dort angelegte Fasermaterial (7) angelegt wird und anschließend Fasern (3) auf dem zweiten Teil des Felgenbettkerns (9,10) und dem Hilfskern (6b) abgelegt werden.

18. Verfahren zur Herstellung eines Rades aus Faserverbundwerkstoff, nach einem der Ansprüche 11 bis 14 **dadurch gekennzeichnet, dass** die Faserablage als Flechten, Wickeln oder Umflechtprozess oder durch Ablage von Prepregs erfolgt.

## Claims

1. Wheel made of fiber composite, especially for motor vehicles, having two wheel flanges, a rim well arranged between them, as well as a wheel disk passing over into a wheel flange, **characterized in that** the wheel disk is formed at least partly by means of fiber layers (7), which run, without interruption, from the rim well over a wheel flange into the wheel disk.

2. Wheel made of fiber composite in accordance with claim 1, **characterized in that** the wheel disk is designed as a wheel spider.

3. Wheel made of fiber composite in accordance with claim 1, **characterized in that** the wheel disk is designed as a flange, which has means for fastening an inner wheel disk or a wheel spider.

4. Wheel made of fiber composite in accordance with one of the above claims, **characterized in that** the continuous fibers (3) of the fiber layers (7) in the area of the rim well have a fiber angle of ± 3° to ± 87°, preferably ± 20° to ± 75° and more preferably ± 30° to ± 70° in relation to the radial direction of the wheel.

5. Wheel made of fiber composite in accordance with one of the above claims, **characterized in that** the continuous fibers (3) of the fiber layers (7) in the area of the wheel disk have a fiber angle of ± 3° to ± 87°, preferably ± 20° to ± 75° and more preferably ± 30° to ± 70° in relation to the radial direction of the wheel.

6. Wheel made of fiber composite in accordance with one of the above claims, **characterized in that** fibers (3) of at least one fiber layer (7) have a fiber angle of 90° in relation to the axis of rotation of the wheel.

7. Wheel made of fiber composite in accordance with one of the above claims, **characterized in that** a cavity rotating entirely or partly about the wheel circumference as well as completely defined by fiber layers (7) is formed in the area between the wheel flange, rim well, especially the well of the rim, and the wheel disk.

8. Wheel made of fiber composite in accordance with claim 7, **characterized in that** the cavity contains at least one lost core (10) or at least one inlay (9).

9. Wheel made of fiber composite in accordance with claim 8, **characterized in that** at least one inlay (9) or one lost core (10) consists of foam, foamed plastic or light metal.

10. Wheel made of fiber composite in accordance with one of the claims 5 through 8, **characterized in that** the cavity is defined by the wheel disk, the rim well, as well as at least one fiber layer, which runs directly from the rim well, especially from the well of the rim, to the wheel disk.

11. Process for manufacture of a wheel in accordance with one of the claims 1 through 10 made of fiber composite, **characterized by** the following process steps:
a) Preparation of a core mold (4), having a cylinder-like rim well core (5) and cylindrical auxiliary core (6a) connected in the axial direction and detachably connected with the rim well core (5), whereby the shape of the rim well core (5) corresponds to the shape of the rim well, wheel flanges and outer area of the wheel disk, and the rim well core (5) is shaped, such that it can be removed after the consolidation of the wheel (11),
b) Deposition of at least one layer of fiber material (7) on the core mold (4), so that a tube of fiber material (7) lies on the core mold (4) and the wheel flanges,
c) Removal of the auxiliary core (6a), especially by extracting in the axial direction, from the tube made of fiber material (7) deposited thereon,
d) Bending over of the fiber material (7) that was deposited beforehand on the auxiliary core (6a), and application of this fiber material (7) to the face of the rim well core (5),
e) Consolidation of the fiber material (7) with a matrix material in a consolidation mold,
and
f) Removal of the wheel (11) from the consolidation mold.

12. Process in accordance with claim 11, **characterized in that**
- in step b), a binder is additionally added to the fiber material (7) during the deposition, and this binder is activated after the deposition of fibers and thus pre-consolidates the fiber material, and
- the core mold (4) is removed after the pre-consolidation.

13. Process in accordance with claim 11, **characterized in that**
- the fiber material (7) is inserted with the core mold (4) into the consolidation mold, and
- the core mold (4) is removed from the mold after the consolidation.

14. Process for the manufacture of a wheel made of fiber composite in accordance with one of the claims 11 through 13, **characterized in that** the rim well core (5) has a segmented structure after step a) for guaranteeing the removability.

15. Process in accordance with one of the claims 11 through 14, **characterized in that** the rim well core (5)
- is designed as inflatable or fillable with a fluid in the undercut area of the wheel flange, or
- is designed as elastic and stabilizable by means of an extractable, rigid inner ring (10) in the undercut area of the wheel flange, and/or
- has a two-part design, whereby one part of the rim well core (5) remains as a lost core in the wheel, or can be removed.

16. Process for the manufacture of a wheel made of fiber composite in accordance with claim 15, **characterized in that** the removable part (9) of the rim well core (5) can be shrunk or dissolved due to the action of a medium or heat.

17. Process for the manufacture of a wheel made of fiber composite in accordance with one of the claims 11 through 15, **characterized in that**
- the rim well core (5) has a multipart, especially two-part design, whereby in particular a first part of the rim well core images the area from the first wheel flange in the direction towards the rim center, especially up to the well of the rim, and a second, lost part (9, 10), of the rim well core images the remaining area of the rim well,
- whereby in process step b) the deposition of fibers first takes place on the first part of the rim well core and its contact surface to the second part (9, 10) of the rim well core, subsequently the second part (9, 10) of the rim well core and the auxiliary core (6b) at the first part of the rim well core and thus is applied to the fiber material (7) applied there, and subsequently fibers (3) are deposited on the second part of the rim well core (9, 10) and the auxiliary core (6b).

18. Process for the manufacture of a wheel made of fiber composite in accordance with one of the claims 11 through 14, **characterized in that** the fiber deposition takes place as braiding, winding or a braiding process or by means of deposition of prepregs.

## Revendications

1. Roue en matériau composite à renfort fibreux, en particulier pour véhicules automobiles, comprenant deux rebords de jante, une base de jante interposée entre ces derniers, ainsi qu'un disque de roue fusionnant dans un rebord de ladite jante, **caractérisée par le fait que** le disque de roue est formé, au moins en partie, par des couches fibreuses (7) pénétrant dans ledit disque à partir de la base de la jante, sans discontinuité, en transitant par un rebord de ladite jante.

2. Roue en matériau composite à renfort fibreux, selon la revendication 1, **caractérisée par le fait que** le disque de ladite roue est réalisé sous la forme d'un croisillon de roue.

3. Roue en matériau composite à renfort fibreux, selon la revendication 1, **caractérisée par le fait que** le disque de ladite roue est réalisé sous la forme d'une bride comportant des moyens affectés à la fixation respective d'un disque intérieur de roue, ou d'un croisillon de roue.

4. Roue en matériau composite à renfort fibreux, selon l'une des revendications précédentes, **caractérisée par le fait que** les fibres ininterrompues (3) des couches fibreuses (7) décrivent, dans la région de la base de la jante, un angle de ± 3° à ± 87°, de préférence de ± 20° à ± 75° et, de préférence encore, de ± 30° à ± 70° par rapport à l'axe de rotation de ladite roue.

5. Roue en matériau composite à renfort fibreux, selon l'une des revendications précédentes, **caractérisée par le fait que** les fibres ininterrompues (3) des couches fibreuses (7) décrivent, dans la région du disque de ladite roue, un angle de ± 3° à ± 87°, de préférence de ± 20° à ± 75° et, de préférence encore, de ± 30° à ± 70° par rapport à la direction radiale de ladite roue.

6. Roue en matériau composite à renfort fibreux, selon l'une des revendications précédentes, **caractérisée par le fait que** des fibres (3) d'au moins une couche fibreuse (7) décrivent un angle de 90° par rapport à l'axe de rotation de ladite roue.

7. Roue en matériau composite à renfort fibreux, selon l'une des revendications précédentes, **caractérisée par le fait qu'**une cavité, ceinturant l'intégralité ou une partie de la circonférence de ladite roue et intégralement délimitée par des couches fibreuses (7), est formée dans la région située entre un rebord de la jante, la base de ladite jante, en particulier une base creuse de ladite jante, et le disque de ladite roue.

8. Roue en matériau composite à renfort fibreux, selon la revendication 7, **caractérisée par le fait que** la cavité renferme au moins un noyau perdu (10) ou au moins une pièce intégrée (9).

9. Roue en matériau composite à renfort fibreux, selon la revendication 8, **caractérisée par le fait qu'**au moins une pièce intégrée (9) ou un noyau perdu (10) consiste en une mousse, en une matière plastique alvéolaire ou en un métal léger.

10. Roue en matériau composite à renfort fibreux, selon l'une des revendications 5 à 8, **caractérisée par le fait que** la cavité est délimitée par le disque de ladite roue, par la base de la jante, ainsi que par au moins une couche fibreuse gagnant directement ledit disque de la roue à partir de ladite base de la jante, en particulier de la base creuse de ladite jante.

11. Procédé de fabrication d'une roue conforme à l'une des revendications 1 à 10, constituée d'un matériau composite à renfort fibreux, **caractérisé par** les étapes opératoires suivantes :
a) préparation d'un outil (4) à noyaux comprenant un noyau (5) de base de jante, de type cylindrique, et un noyau auxiliaire cylindrique (6a) attenant dans le sens axial et relié amoviblement audit noyau (5) de base de jante, sachant que la forme dudit noyau (5) de base de jante correspond à la forme de la base de la jante, des rebords de ladite jante et de la région extérieure du disque de la roue, et que ledit noyau (5) de base de jante est configuré de manière à pouvoir être enlevé à l'issue de la consolidation de ladite roue (11),
b) dépôt d'au moins une couche de matériau fibreux (7) sur ledit outil (4) à noyaux, de façon telle qu'un boyau souple de matériau fibreux (7) repose sur ledit outil (4) à noyaux et sur les rebords de la jante,
c) dissociation, notamment par extraction dans le sens axial, dudit noyau auxiliaire (6a) d'avec le boyau souple de matériau fibreux (7) qui est déposé sur ce dernier,
d) rabat dudit matériau fibreux (7) précédemment déposé sur ledit noyau auxiliaire (6a), et mise en applique de ce matériau fibreux (7) contre la face extrême dudit noyau (5) de base de jante,
e) consolidation dudit matériau fibreux (7) à l'aide d'un matériau de matrice, dans un outil de consolidation, et
f) retrait de la roue (11) hors dudit outil de consolidation.

12. Procédé selon la revendication 11, **caractérisé par le fait**
- **qu'**un liant est ajouté au matériau fibreux (7) à l'étape b), lors du dépôt, et ce liant est activé à l'issue du dépôt de fibres, ledit matériau fibreux s'en trouvant ainsi consolidé préalablement, et
- **que** l'outil (4) à noyaux est retiré à l'issue de la consolidation préalable.

13. Procédé selon la revendication 11, **caractérisé par le fait que**
- le matériau fibreux (7) est inséré dans l'outil de consolidation avec l'outil (4) à noyaux, et
- que ledit outil (4) à noyaux est démoulé à l'issue de la consolidation.

14. Procédé selon l'une des revendications 11 à 13, dévolu à la fabrication d'une roue en matériau composite à renfort fibreux et **caractérisé par le fait que** le noyau (5) de base de jante est pourvu d'une structure segmentée, après l'étape a), en vue de garantir l'aptitude à l'enlèvement.

15. Procédé selon l'une des revendications 11 à 14, **caractérisé par le fait que** le noyau (5) de base de jante est
- conçu pour pouvoir être respectivement gonflé, ou empli d'un fluide, dans la région contre-dépouillée du rebord de la jante, ou
- de réalisation douée d'élasticité et apte à la stabilisation au moyen d'une bague intérieure (10) rigide et extractible, dans ladite région contre-dépouillée du rebord de la jante, et/ou
- réalisé en deux parties, une partie dudit noyau (5) de base de jante demeurant alors dans la roue, en tant que noyau perdu, ou pouvant être retirée.

16. Procédé selon la revendication 15, dévolu à la fabrication d'une roue en matériau composite à renfort fibreux et **caractérisé par le fait que** la partie amovible (9) du noyau (5) de base de jante peut être thermorétractée ou dissoute sous l'action respective d'un fluide, ou de la chaleur.

17. Procédé selon l'une des revendications 11 à 15, dévolu à la fabrication d'une roue en matériau composite à renfort fibreux et **caractérisé par le fait que**
- le noyau (5) de base de jante est réalisé en plusieurs parties, notamment en deux parties, sachant, en particulier, qu'une première partie dudit noyau de base de jante matérialise la région s'étendant depuis le premier rebord de la jante en direction du centre de ladite jante, notamment jusqu'à la base creuse de ladite jante, et qu'une seconde partie perdue (9, 10) dudit noyau de base de jante matérialise la région restante de la base de ladite jante,
- sachant que, durant l'étape opératoire b), le dépôt de fibres a tout d'abord lieu sur la première partie du noyau de base de jante et sur la surface de ladite partie qui est en contact avec la seconde partie (9, 10) dudit noyau de base de jante, ladite seconde partie (9, 10) dudit noyau de base de jante, et le noyau auxiliaire (6b), étant ensuite mis en applique contre ladite première partie du noyau de base de jante, et donc contre le matériau fibreux (7) plaqué sur cette dernière, après quoi des fibres (3) sont déposées sur ladite seconde partie (9, 10) dudit noyau de base de jante et sur ledit noyau auxiliaire (6b).

18. Procédé selon l'une des revendications 11 à 14, dévolu à la fabrication d'une roue en matériau composite à renfort fibreux et **caractérisé par le fait que** le dépôt de fibres est effectué sous la forme d'un tressage, d'un bobinage ou d'un processus de tressage enveloppant, voire par dépôt d'éléments préimprégnés.
